(19) Europäisches Patentamt
European Patent Office
Office européen des brevets

(11) Veröffentlichungsnummer: **0 073 994**
**B1**

(12) # EUROPÄISCHE PATENTSCHRIFT

(45) Veröffentlichungstag der Patentschrift: **04.12.85**

(51) Int. Cl.[4]: **C 08 L 83/06**, C 08 K 5/54

(21) Anmeldenummer: **82107676.7**

(22) Anmeldetag: **23.08.82**

(54) **Unter Ausschluss von Wasser lagerfähige, plastische RTV-Organopolysiloxanformmassen.**

(30) Priorität: **05.09.81 DE 3135185**

(43) Veröffentlichungstag der Anmeldung: **16.03.83 Patentblatt 83/11**

(45) Bekanntmachung des Hinweises auf die Patenterteilung: **04.12.85 Patentblatt 85/49**

(84) Benannte Vertragsstaaten: **AT BE CH DE FR GB IT LI NL SE**

(56) Entgegenhaltungen:
**DE - A - 2 335 569**
**DE - A - 2 827 293**

(73) Patentinhaber: **BAYER AG, Konzernverwaltung RP Patentabteilung, D-5090 Leverkusen 1 Bayerwerk (DE)**

(72) Erfinder: **Maass, Günther, Dr., Duckerather Weg 85, D-5060 Bergisch-Gladbach 2 (DE)**
Erfinder: **Sattlegger, Hans, Dr., Auf dem Heidchen 9, D-5074 Odenthal (DE)**
Erfinder: **Lücking, Hans Joachim, Dr., Blütenstrasse 16, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die vorliegende Erfindung betrifft plastisch verformbare Gemische aus Organopolysiloxanen, neuen Vernetzungsmitteln, Katalysatoren und Hilfsstoffen. Unter Ausschluß von Feuchtigkeit sind die Mischungen lagerfähig, härten aber bei Zutritt normaler Luftfeuchtigkeit oder Wasser zu einem elastischen Siliconkautschuk.

Derartige Gemische finden vornehmlich Verwendung als Fugendichtungsmassen im Bauwesen, bei sanitären Anlagen und in der Industrie. Sie enthalten eine gegebenenfalls mit Füllstoff oder anderen Hilfsmitteln vermischtes $\alpha,\omega$-Dihydroxypolydiorganosiloxan. Gibt man zu einem derartigen Öl unter Feuchtigkeitsausschluß eine Siliciumverbindung, die mindestens drei hydrolysierbare Gruppen trägt, so erhält man Mischungen, die bei Zutritt atmosphärischer Luft durch deren Wasserdampfgehalt zu einem elastischen Kautschuk aushärten.

Als vernetzend wirkende Siliciumverbindung sind z. B. Amino-, Oximato-, Acyloxy- und Acylamidosilane bekannt und gebräuchlich. Die trifunktionellen Acetoxy- und Aminosilane können bei der Anwendung in geschlossenen Räumen geruchsbelästigende Dämpfe abgeben. Ein weiterer Nachteil einzelner derartiger Systeme ist, daß Gemische mit diesen Vernetzern unter Umständen nicht hinreichend lagerfähig sind. Aus den Alkyltriacyloxysilanen wird bei der die Vernetzung einleitenden Hydrolyse Carbonsäure frei, die korrosiv wirken kann.

Auch Trialkenoxysilane sind als Vernetzer geeignet, bedingen aber eine schlechte Lagerstabilität der damit hergestellten Pasten. In der DE-OS 2 827 293 wird eine Pastenmischung mit Trialkenoxysilanen beschrieben, bei der Zusätze spezieller Silanverbindungen die Lagerstabilität verbessern. Diese speziellen Silane, z. B.

$$[(CH_3)_2N]_2 - C = N - CH_2 - CH_2 - CH_2Si(CH_3)_a(OCH_3)_{3-a}$$

sind sehr aufwendige Substanzen, da sie über komplizierte Synthesewege hergestellt werden müssen.

Überraschenderweise wurde gefunden, daß man lagerstabile RTV-Pasten erhält, wenn Silane der allgemeinen Formel

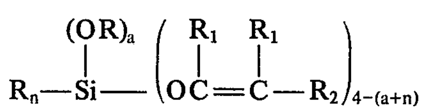

oder deren Teilhydrolysate,

wobei

- R eine gegebenenfalls substituierte Alkyl- oder Arylgruppe ist,
- $R_1$ Wasserstoff oder R bedeutet und
- $R_2$ eine Acyl-, Carbalkoxy-, Carbaroxygruppe oder $R_1$ sein kann und
- a = eine ganze Zahl von 1 bis 3 und
- n = 0, 1 oder 2, wobei $a + n \leq 3$ ist,

als vernetzend wirkende Substanz gemeinsam mit geringen Zusätzen von Basen und Schwermetallsalzen langkettiger Carbonsäuren als Vernetzungskatalysatoren eingesetzt werden.

Gegenstand der vorliegenden Erfindung sind somit plastische, unter Wasserausschluß lagerfähige, bei Zutritt von Feuchtigkeit vernetzende Organosiloxanformmassen aus einem Hydroxypolydiorganosiloxan, einer vernetzt wirkenden Substanz, sowie gegebenenfalls Vernetzungskatalysatoren, Haftvermittlern, Füllstoffen, Pigmenten und anderen Hilfsstoffen, die dadurch gekennzeichnet sind, daß sie Vernetzer der oben beschriebenen Art oder deren Teilhydrolysate gemeinsam mit geringen Zusätzen von Basen und/oder Schwermetallverbindungen als Vernetzungskatalysatoren eingesetzt werden.

Ein Vorteil der erfindungsgemäßen Vernetzersubstanzen liegt darin, daß sie beim Aushärten unter Feuchtigkeitseinfluß in einer damit hergestellten Paste keine korrosiven Nebenprodukte, sondern nur neutrale Ketoverbindungen im Gemisch mit Alkoholen liefern. Wegen dieser Eigenschaft sind derartige Pasten sowohl bei der Herstellung als auch bei der Anwendung sehr angenehm zu handhaben. Die Vernetzer können nach an sich bekannten Methoden hergestellt werden.

Als Alkoxygruppen kommen z. B. Methoxy-, Ethoxy-, Propoxy- oder Butoxyreste in Frage. Die Vernetzersubstanzen enthalten 1 bis zu 3 (1)-Alkenoxygruppen, die sich von der Enolform von Ketoverbindungen ableiten. Beim Aushärten damit hergestellter Pasten unter Feuchtigkeitseinfluß werden die (1)-Alkenoxygruppen hydrolytisch abgespalten und bilden die Ketoverbindung zurück. So entsteht z. B. aus einer Isopropenoxygruppe Aceton und aus Isobutenoxygruppen Methylethylketon. Die Substituenten sind nicht auf Mono-Ketoverbindungen beschränkt, sondern können auch von der sich besonders leicht bildenden Enolform von 1,3-Diketonen wie etwa Acetylaceton abstammen. Als weitere Variation des Alkenoxyrestes kann die substituierte Enolform eines Ketosäureesters, wie z. B. Acetessigsäureäthylester eingesetzt sein. Auch enolisierbare Aldehyde sind als Ausgangsverbindungen einzusetzen. Die Verknüpfung der Siliconpolymeren kann auch mit Teilhydrolysaten der beschriebenen Vernetzer vorgenommen werden.

Der Vernetzer wird in einer Menge von etwa 2 bis 15 Gew.-% vorzugsweise 3 bis 7 Gew.-%, jeweils bezogen auf Gesamtpaste, zugegeben.

Als Vernetzungskatalysatoren werden Schwermetallsalze und Basen gemeinsam eingesetzt. Basische Katalysatoren können Alkalihydroxide wie LiOH, NaOH oder KOH oder aber stickstoffhaltige primäre, sekundäre oder tertiäre Basen sein. Es können Mono-, Di-, Tri- oder Polyamine sein, wobei der Stickstoff auch in cyclischen Systemen oder Imingruppen vorliegen kann. Als besonders geeignet haben sich sehr starke Basen, wie z. B. 1,8-Diaza-bicyclo(5,4,0)undec-7-en sowie 1,5-Diazo-bicyclo(4,3,0)non-5-en erwiesen. Die Menge dieser Katalysatoren kann zwischen etwa 50 ppm und 1 Gew.-%, bezogen auf die Gesamtpaste, schwanken.

Zusammen mit diesen basischen Verbindungen werden weiterhin Schwermetallverbindungen von Carbonsäuren eingesetzt, wie sie aus dem Stand der Technik bei RTV-Siliconkautschuken bekannt sind. Dazu zählen z. B. Dibutylzinndilaurat, Dibutylzinndiacetat, Dibutylzinndioctat.

Basispolymere derartigen Pasten sind $\alpha,\omega$-Dihydroxypolydiorganosiloxane der Viskosität 500 bis 1 000 000 mPa · s, wobei die Organoreste Alkyl-, wie Methyl-, Alkenyl-, wie Vinyl-, Aryl-, wie Phenylgruppen oder Mischungen daraus sein können. Die weitaus wichtigsten Polymere dieser Klasse sind die Polydimethylsiloxane. Diesem Grundpolymer, das auch zu geringen Anteilen endständige Trimethylsiloxygruppen besitzen darf, können auch methylendständige oder gering verzweigte Polydimethylsiloxane beigemischt sein.

Nach dem bekannten Stand der Technik werden die mechanischen Eigenschaften des entstehenden Kautschuks durch Zugabe von verstärkenden Füllstoffen, wie gefällter oder pyrogener Kieselsäure zur Paste verbessert. Auch die Zugabe von bekannten Haftvermittlern und anderen Hilfsmitteln ist wie bei ähnlichen Pasten möglich.

In einer anderen Ausführungsform der vorliegenden Erfindung können auch wahlweise eine oder mehrere der Komponenten erst kurz vor der Verwendung dem Pastengemisch zugesetzt werden.

Die beschriebenen unter Wasserausschluß lagerstabilen Siliconformmassen sind besonders günstig bei der Anwendung, da die eingesetzten Vernetzer keine korrosiven oder belästigenden Spaltprodukte entwickeln. Zudem sind die erfindungsgemäßen Vernetzer kostengünstig herzustellen. Dadurch stellen die erfindungsgemäßen Massen einen erheblichen Vorteil gegenüber dem Stand der Technik dar.

Anhand der folgenden Beispiele soll der Gegenstand der vorliegenden Erfindung noch näher erläutert werden.

## Beispiel 1

Es werden 90 Gew.-Teile $\alpha,\omega$-Dihydroxypolydimethylsiloxan der Viskosität 50 000 mPa · s vorgelegt. Dazu werden bei Raumtemperatur 6 Gew.-Teile eines Methyl-di-ethoxy-isopropenoxy-silans und 0,2 Gew.-Teile 1,5-Diazo-bicyclo-1(4,3,0)non-5-en gegeben und gerührt. Nun werden 9 Gew.-Teile einer feindispersen Kieselsäure zugegeben und bis zur Homogenität unter Vakuum gerührt. Zum Schluß werden 0,1 Gew.-Teil Dibutylzinndilaurat direkt oder in einem Lösungsmittel gelöst zugegeben und ca. 10 Minuten unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Die erfindungsgemäße Maßnahme führt dazu, daß dieses Produkt insbesondere hinsichtlich des Geruches und damit verbunden der Verarbeitbarkeit des Materials (keine Belästigung durch Essigsäure oder Amin) eine wesentliche Verbesserung darstellt. Nach der Vernetzung zum Gummi hat dieser einen 100% E-Modul von 0,15 $N/mm^2$ eine Reißfestigkeit von 1,15 $N/mm^2$ und eine Bruchdehnung von 600% (Alle Werte gemessen nach DIN 53 504).

## Beispiel 2

Es werden eine Mischung aus 66 Gew.-Teilen $\alpha,\omega$-Dihydroxy-polydimethylsiloxan einer Viskosität von 18 000 mPa · s und 23,8 Gew.-Teilen $\alpha,\omega$-Bis-trimethylsiloxy-polydimethylsiloxan vorgelegt. Dazu werden bei Raumtemperatur 6 Gew.-Teile Methylethoxy-di-isopropenoxysilans und 0,1 Gew.-Teile 1,8-Diaza-bicyclo(5,4,0)undec-7-en gegeben und kurz gerührt. Nun werden 10 Gew.-Teile einer feindispersen Kieselsäure zugegeben und bis zur Homogenität gerührt. Zum Schluß werden 0,2 Gew.-Teile Dibutylzinndilaurat direkt oder in einem Lösungsmittel gelöst (Toluol) zugegeben und ca. 10 Minuten unter Vakuum homogen eingerührt. Nun wird die Masse in Kartuschen oder Tuben abgefüllt und kann ohne Feuchtigkeitszutritt über mehrere Monate (bei entsprechend trockener Kieselsäure, weit über 1/2 Jahr) gelagert werden, ohne daß die Vulkanisationsfähigkeit oder die Transparenz beeinträchtigt

werden. Auch zeigt das Produkt keine Vergilbung.

Das Produkt, das transparent ist, härtet an Luft schnell gut und gleichmäßig durch und gibt dabei erfindungsgemäß keine irgendwie stark riechenden Gase ab. Der daraus entstandene Gummi zeigt eine Shore A Härte von 10, eine Bruchdehnung von 550% sowie einen 100% E-Modul von 0,2 $N/mm^2$ und eine Reißfestigkeit von 0,7 $N/mm^2$.

Beispiel 3

Es wird eine Mischung aus 90 Gew.-Teilen $\alpha,\omega$-Dihydroxy-polydimethylsiloxan einer Viskosität von 50 000 mPa · s, 6 Gew.-Teile Diethoxy-ethoxycarbonylpropan-2-yloxy-methylsilan und 0,1 Gew.-Teil 1,8-Diaza-bicyclo(5,4,0)undec-7-en vorgelegt. Dazu werden 6,7 Gew.-Teile einer feindispersen Kieselsäure zugegeben und bis zur Homogenität gerührt. Zum Schluß werden 0,2 Gew.-Teile Dibutylzinndilaurat direkt oder in einem Lösungsmittel gelöst (Xylol) zugegeben und ca. 10 Minuten unter Vakuum homogen eingerührt. Nun wird die Masse in Kartuschen oder Tuben abgefüllt und kann ohne Feuchtigkeitszutritt über mehrere Monate gelagert werden, ohne daß die Vulkanisationsfähigkeit oder die Haftung bei einer späteren Anwendung beeinträchtigt werden. Das Produkt zeigt ähnlich positive Eigenschaften wie das unter Beispiel 1 und 2 hergestellte Produkt.

Beispiel 4

In 1 kg diethoxy-ethoxycarbonylpropan-2-yloxy-methylsilan werden 80 mg feste KOH unter Rühren gelöst. 6 Gew.-Teile dieser Mischung verrührt man mit 90 Gew.-Teilen $\alpha,\omega$-Dihydroxypolydimethylsiloxan zu einer homogenen Lösung. Nach Zugabe von 5 Gew.-Teilen feindisperser Kieselsäure wird bis zur gleichmäßigen Verteilung des Füllstoffs gerührt. Als letzte Komponente gibt man 0,1 Gew.-Teilen Dibutylzinndilaurat zu und entfernt dann die eingebrachten Gase durch 10minütiges Rühren unter Vakuum. Die plastische Masse wird nun in Tuben abgefüllt und kann so ohne Feuchtigkeitszutritt über mehrere Monate gelagert werden, ohne daß die Vulkanisationsfähigkeit beeinträchtigt wird. Nach Ausstreichen einer kleinen Probe entsteht an der Luft ein elastischer Gummi.

**Patentansprüche**

1. Plastische, unter Wasserausschluß lagerfähige, bei Zutritt von Feuchtigkeit vernetzende Organopolysiloxanformmassen aus einem Hydroxypolydiorganopolysiloxan, einer vernetzend wirkenden Substanz, gegebenenfalls zusammen mit Vernetzungskatalysatoren, Haftvermittlern, Füllstoffen, Pigmenten und anderen Hilfsstoffen, dadurch gekennzeichnet, daß Silane der Formel

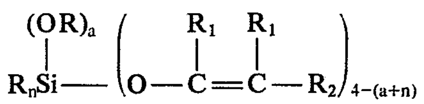

oder deren Teilhydrolysate,

wobei

R eine gegebenenfalls substituierte Alkyl- oder Arylgruppe ist,
$R_1$ Wasserstoff oder R bedeutet und
$R_2$ eine Acyl-, Carbalkoxy-, Carbaroxygruppe oder $R_1$ sein kann und
a = eine ganze Zahl von 1—3 und
n = 0, 1 oder 2, wobei $a+n \leq 3$ ist,

als vernetzend wirkende Substanz eingesetzt werden.

2. Plastische Organosiloxanformmassen nach Anspruch 1, dadurch gekennzeichnet, daß als Vernetzungskatalysator Schwermetallsalze zusammen mit Basen eingesetzt werden.

3. Plastische Organosiloxanformmassen nach Anspruch 2, dadurch gekennzeichnet, daß als Basen Alkalihydroxide verwandt werden.

4. Plastische Organosiloxanformmassen nach einem der Ansprüche 1 oder 2, dadurch gekennzeichnet, daß als Vernetzungskatalysatoren stickstoffhaltige Basen eingesetzt werden.

5. Plastische Organosiloxanformmassen nach einem der Ansprüche 1 bis 4, dadurch gekennzeichnet, daß wahlweise eine oder mehrere Komponenten kurz vor der Verwendung zugemischt werden.

## Claims

1. Plastic organopolysiloxane moulding compositions which are storable under the exclusion of water, crosslink on the admission of moisture and consist of a hydroxypolydiorganopolysiloxane, a substance with crosslinking action, optionally together with crosslinking catalysts, adhesion promoters, fillers pigments and other auxiliaries, characterised in that silanes of the formula

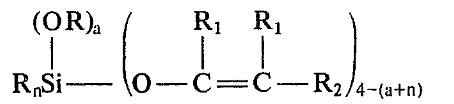

or partial hydrolysis products thereof,

wherein

R is an optionally substituted alkyl or aryl group,
$R_1$ denotes hydrogen or R and
$R_2$ can be an acyl, carbalkoxy or carbaroxy group or $R_1$ and
a = an integer from 1—3 and
n = 0, 1 or 2, a+n being $\leq 3$,

are used as the substance with crosslinking action.

2. Plastic organosiloxane moulding compositions according to Claim 1, characterised in that heavy metal salts are used together with bases as the crosslinking catalyst.

3. Plastic organosiloxane moulding compositions according to Claim 2, characterised in that alkali metal hydroxides are used as the bases.

4. Plastic organosiloxane moulding compositions according to one of Claims 1 or 2, characterised in that nitrogen-containing bases are used as the crosslinking catalysts.

5. Plastic organosiloxane moulding compositions according to one of Claims 1 to 4, characterised in that, optionally, one or more components are added shortly before the use of the compositions.

## Revendications

1. Matières à mouler plastiques en organopolysiloxane, stockables en l'absence d'eau, se réticulant sous l'effet de l'humidité, composées d'un hydroxypolydiorganopolysiloxane, d'une substance à effet réticulant, éventuellement accompagnés de catalyseurs de réticulation, d'agents de pontage, de charges, de pigments et autres produits auxiliaires, caractérisées par le fait qu'on met en oeuvre des silanes de formule

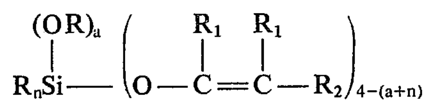

ou des produits de leur hydrolyse partielle,

formule dans laquelle

R est un groupe alkyle ou aryle éventuellement substitué,
$R_1$ est de l'hydrogène ou représente R et
$R_2$ est un groupe acyle, carbalkoxy, carbaroxy ou peut représenter $R_1$ et
a = un nombre entier de 1 à 3 et
n = 0, 1 ou 2, avec a+n $\leq 3$

comme substance à effet de réticulation.

2. Matières à mouler plastiques en organosiloxanes suivant la revendication 1, caractérisées par le fait qu'on met en oeuvre comme catalyseurs de réticulation des sels de métaux lourds avec des bases.

3. Matières à mouler plastiques en organosiloxanes suivant la revendication 2, caractérisées par le fait qu'on utilise comme bases des hydroxydes alcalins.

4. Matières à mouler plastiques en organosiloxanes suivant les revendications 1 ou 2, caractérisées par le fait qu'on met en ouevre comme catalyseurs de réticulation des bases azotées.

5. Matières à mouler plastiques en organosiloxanes suivant l'une des revendications 1 à 4, caractérisées par le fait qu'on ajoute au choix un ou plusieurs constituants peu de temps avant l'emploi.